# EUROPEAN PATENT APPLICATION

(11) **EP 4 202 027 A1**
(43) Date of publication of application: **28.06.2023**
(21) Application number: 21216613.6
(22) Date of filing: 21.12.2021
(51) Int. Cl.: C12C 5/00

(54) **METHOD FOR PRODUCING BEER**

(71) Applicant: DuPont Nutrition Biosciences ApS, 1411 Copenhagen K (DK)
(72) Inventor: The designation of the inventor has not yet been filed
(74) Representative: D Young & Co LLP

(57) **Abstract**

The present invention relates to a method for producing beer and beer-related beverages, wherein said method comprises adding a catalase during the fermentation phase and/or maturation and/or stabilization phases of the brewing process to improve the flavor and/or flavor stability of the finished beer. The catalase may additionally or alternatively be added to the finished beer itself

## Description

### FIELD OF THE INVENTION

The present invention relates to a method for producing beer and beer-related beverages, wherein said method comprises adding a catalase during the fermentation phase and/or maturation and/or stabilization phases of the brewing process to improve the flavor and/or flavor stability of the finished beer. The catalase may additionally or alternatively be added to the finished beer itself.

### BACKGROUND TO THE INVENTION

The process of producing beer comprises several stages. In general, the brewing process may involve extracting malt by mashing to form wort. Yeast is then added to the wort in order to ferment any fermentable sugars present in the wort to alcohol. The beer may then be further matured and/or stabilized prior to bottling, in order to achieve the desired flavor and flavor stability. The maturation and stabilization phases may be referred to as the "lagering" period.

One issue that may be faced in brewing is the potential detrimental effect of oxidation on the flavor and stability of the beer produced. The flavor of the finished beer must have a stability commensurate with the desired shelf-life of the finished product. There is therefore a need in the art to provide an improved brewing process facilitating increased oxidative stability, and hence improved flavor and flavor stability of the finished product.

### SUMMARY OF THE INVENTION

The present inventors have surprisingly found an advantageous effect on beer flavor and flavor stability of adding a catalase enzyme at a late stage during the brewing process. The present invention is therefore directed to adding catalase during fermentation and/or maturation and/or stabilization of the beer, or to the final beer itself. Advantageously, the positive effect on flavor and/or flavor stability is achieved in the final beer.

The advantageous effect of the catalase may be related to oxidative effects. Oxidation may have detrimental effects on the flavor and flavor stability of beer. Without wishing to be bound by theory, it is thought that the catalase can only act on the prooxidative radical generation if hydrogen peroxide is formed, for example, after the consumption of the endogenous antioxidative potential (EAP).

The present invention provides a method for producing a beer with improved flavor and/or flavor stability, wherein said method comprises adding a catalase composition during fermentation and/or maturation and/or stabilization, and/or comprises adding a catalase composition to the final beer.

Advantageously, the catalase may be active during fermentation and/or maturation and/or stabilization of the beer. The catalase may be added after boiling of the wort in order to avoid inactivation of the catalase early in the brewing process. In one aspect of the invention, catalase may be added after wort boiling. In one aspect the catalase may additionally be added prior to wort boiling.

In one aspect of the invention catalase may be added at more than one stage of the brewing process. For example, catalase should be added during or after fermentation and/or maturation and/or stabilization, but may also be added e.g. during mashing and/or before fermentation. The catalase may also be added directly to the final beer.

In one aspect the catalase is a microbial catalase. In a preferred aspect said microbial catalase is derivable from a bacterium or a fungus. In one aspect the microbial catalase is derived from *Aspergillus, Bacillus, Saccharomyces, Escherichia, Pseudomonas, Trichoderma,* or *Scytalidium sp.* In one aspect the microbial catalase is derived from *Aspergillus niger, Aspergillus oryzae, Bacillus subtilis, Bacillus licheniformis, Bacillus fragilis, Bacillus pumilus, Bacillus halodurans, Saccharomyces cerevisiae, Escherichia coli, Pseudomonas aeruginosa, Trichoderma reesei,* or *Scytalidium thermophilum.* In a preferred aspect the microbial catalase is derivable from an *Aspergillus sp.,* preferably *A. niger.*

In a preferred aspect said catalase has or comprises a sequence according to any of SEQ ID NOs:1, 2, 3 or 4, or a sequence with at least 70% identity thereto. For example, said catalase may have a sequence with at least 75%, 80%, 85%, 90%, 95%, 96%, 97%, 98%, 99% or 100% identity to any of SEQ ID NOs:1, 2, 3, or 4. In one aspect the catalase may comprise or consist of a sequence according to SEQ ID NO:1, 2, 3, or 4, or a sequence having at least 70% identity thereto. Most preferably the catalase according to the invention has the sequence of SEQ ID NO:1. The catalase may be produced by recombinant techniques which will be well known to those of skill in the art.

In one aspect of the present invention, the catalase composition further comprises glucose oxidase.

The invention also encompasses a beer obtained or obtainable by a method according to the invention. In one aspect the final beer comprises catalase. The final beer may also or alternatively comprise glucose oxidase.

In one aspect of the invention, the oxidative stability of the beer is improved.

The invention also encompasses use of a catalase composition as described herein in the production of beer, wherein said catalase composition is adding during fermentation and/or maturation and/or stabilization, and/or is added to the final beer.

### BRIEF DESCRIPTION OF THE FIGURES

Figure 1 depicts the results of the EAP and T600 determination by means of POBN in oxidative wort stability by addition of catalase as set forth SEQ ID NO:1 by forcing test 60°C and 3.5 mM POBN using 0.0, 4.4, 8.8, 22.1 and 44.2U/ml as shown in legends.
**Figure 2** depicts the results of the EAP and T600 determination by means of POBN in oxidative wort stability by addition of catalase as set forth SEQ ID NO:1 by forcing test 60°C and 3.5 mM POBN using 0.0, 0.9, 1.8, 2.7, 3.5, 4.4 and 6.2U/ml as shown in legends.
**Figure 3** depicts the results of the EAP and T600 determination by means of POBN in oxidative low EAP beer (pilsner type) stability by addition of catalase as set forth SEQ ID NO: 1 by forcing test 60°C and 3.5 mM POBN using 0.0, 0.2, 0.4, 0.8, 1.6, 2.4, 3.1 and 3.9U/ml as shown in legends.
**Figure 4** depicts the results of the EAP and T600 determination by means of POBN in oxidative medium EAP beer (pilsner type) stability by addition of catalase as set forth SEQ ID NO:1 by forcing test 60°C and 3.5 mM POBN using 0.0, 0.2, 0.39, 0.79 and 1.97 U/ml as shown in legends.

### DETAILED DESCRIPTION OF THE INVENTION

The process of beer-brewing is well known to the person skilled in the art. A standard process may comprise providing malted barley and/or unmalted adjuncts, referred to as the grist. The next stage in the process may comprise mashing the grist with water (with heating and stirring), in order that the carbohydrates are degraded to fermentable sugars by the aid of the enzymes naturally present in the malt. This may be referring to as the mashing phase.

Following mashing, the liquid extract, referred to as the wort, is separated from the solids (spent grain particles and adjuncts) in order to get clear wort. Hops may then be added to the wort. After addition of hops, the wort is then boiled and cooled to facilitate addition of yeast. The fermentation stage involves fermentation of fermentable sugars to alcohol by the yeast. After a main fermentation, lasting typically 5-10 days, most of the yeast is removed and the so-called "green beer" is formed.

The "green" beer resulting from this primary fermentation still contains some non-settled yeasts as well as relatively high levels of undesirable flavor components, such as diketones, such as diacetyl and acetyl aldehyde. During the maturation phase these undesirable flavor components are converted into bland tasting compounds. For example, during maturation the amount of diacetyl, a compound with a buttery off-flavor, may be converted into tasteless acetoin. In the subsequent stabilization phase, colloidal stability of the beer may be increased. In this regard, the beer may be retained to promote formation of protein polyphenol aggregates, followed by removal of precipitated aggregates, for example by filtration/precipitation.

The phase which incorporates both the maturation and stabilization phases of beer production may be referred to as the lagering period.

According to the invention an enzyme composition comprising a catalase is added during the brewing process at a time point later than the mashing step and/or later than wort boiling.

Catalase may be added before and/or after pasteurization and/or bottling.

The beer produced by the process according to the invention may be any type of beer. The term "beer" as used herein is intended to cover at least beer prepared from mashes prepared from unmalted cereals as well as all mashes prepared from malted cereals, and all mashes prepared from a mixture of malted and unmalted cereals. The term "beer" covers bottom fermented but also top fermented beers as well as beers prepared with adjuncts, and beers with all possible alcohol contents.

Preferred beer types comprise ales, strong ales, stouts, porters, lagers, bitters, export beers, malt liquors, happoushu, high-alcohol beer, low-alcohol beer, low-calorie beer or light beer. The invention also extends to non- or low-alcohol beers. In a preferred aspect the beer may be IPA, pilsner or low- or no-alcohol beer.

In one aspect of the invention the shelf-life of the beer may be improved or extended. In one aspect the shelf-life may be extended to 4, 6, 9, 12, or 24 months.

Advantageously, the present invention may facilitate a reduction in the amount of sulphites used in the brewing process, or present in the final beer product.

The beer obtained according to the present invention will typically be packaged. Any suitable packaging may be used, for example a bottle, a keg or a can. Beer prepared according to the invention may also be packaged in a bulk-tank. Accordingly, the invention provides a packaging comprising the beer obtained according to the invention, for example a bottle, a keg or a can comprising such a beer.

### General definitions

Unless defined otherwise, all technical and scientific terms used herein have the same meaning as commonly understood by one of ordinary skill in the art to which this disclosure belongs. This disclosure is not limited by the exemplary methods and materials disclosed herein, and any methods and materials similar or equivalent to those described herein can be used in the practice or testing of embodiments of this disclosure. Numeric ranges are inclusive of the numbers defining the range.

The headings provided herein are not limitations of the various aspects or embodiments of this disclosure which can be had by reference to the specification as a whole. Accordingly, the terms defined immediately below are more fully defined by reference to the specification as a whole.

As used herein, the term "polynucleotide" it is synonymous with the term "nucleotide sequence" and/or the term "nucleic acid sequence". Unless otherwise indicated, any nucleic acid sequences are written left to right in 5' to 3' orientation.

The term "protein", as used herein, includes proteins, polypeptides, and peptides. As used herein, the term "amino acid sequence" is synonymous with the term "polypeptide" and/or the term "protein". In the present disclosure and claims, the name of the amino acid, the conventional one-letter and three-letter codes for amino acid residues may be used. The 3-letter code for amino acids as defined in conformity with the IUPACIUB Joint Commission on Biochemical Nomenclature (JCBN). It is also understood that a polypeptide may be coded for by more than one nucleotide sequence due to the degeneracy of the genetic code. Unless otherwise indicated, any amino acid sequences are written left to right in amino to carboxy orientation.

Other definitions of terms may appear throughout the specification. Before the exemplary embodiments are described in more detail, it is to understand that this disclosure is not limited to particular embodiments described, as such may, of course, vary. It is also to be understood that the terminology used herein is for the purpose of describing particular embodiments only, and is not intended to be limiting, since the scope of the present disclosure will be limited only by the appended claims.

Where a range of values is provided, it is understood that each intervening value, to the tenth of the unit of the lower limit unless the context clearly dictates otherwise, between the upper and lower limits of that range is also specifically disclosed. Each smaller range between any stated value or intervening value in a stated range and any other stated or intervening value in that stated range is encompassed within this disclosure. The upper and lower limits of these smaller ranges may independently be included or excluded in the range, and each range where either, neither or both limits are included in the smaller ranges is also encompassed within this disclosure, subject to any specifically excluded limit in the stated range. Where the stated range includes one or both of the limits, ranges excluding either or both of those included limits are also included in this disclosure.

It must be noted that as used herein and in the appended claims, the singular forms "a", "an", and "the" include plural referents unless the context clearly dictates otherwise.

The terms "comprising", "comprises", "has", "having" and "comprised of" as used herein are synonymous with "including", "includes" or "containing", "contains", and are inclusive or openended and do not exclude additional, non-recited members, elements or method steps. The terms "comprising", "comprises", "has", "having" and "comprised of" also include the term "consisting of.

The publications discussed herein are provided solely for their disclosure prior to the filing date of the present application. Nothing herein is to be construed as an admission that such publications constitute prior art to the claims appended hereto.

### Catalase

Catalase enzymes catalyze the first order reaction:

2H₂O₂ → 2H₂O + O₂

A catalase for use according to the present invention may belong to EC 1.11.1.6.

In a preferred embodiment the catalase is a microbial catalase, such as a catalase isolated or derivable from a fungus or bacterium. In one aspect the microbial catalase is derived from *Aspergillus, Bacillus, Saccharomyces, Escherichia, Pseudomonas, Trichoderma,* or *Scytalidium sp.* In one aspect the microbial catalase is derived from *Aspergillus niger, Aspergillus oryzae, Bacillus subtilis, Bacillus licheniformis, Bacillus fragilis, Bacillus pumilus, Bacillus halodurans, Saccharomyces cerevisiae, Escherichia coli, Pseudomonas aeruginosa, Trichoderma reesei,* or *Scytalidium thermophilum.*

In a preferred aspect the catalase is derived from *Aspergillus,* preferably *Aspergillus niger.* The catalase may be produced by recombinant techniques, and such methods are well known in the art. In one aspect the catalase may be expressed in *Aspergillus niger* or *Trichoderma reesei.*

A catalase suitable for use according to the present invention may be recovered from recombinant cell cultures by methods well-known to those skilled in the art, including for example ammonium sulfate or ethanol precipitation, acid extraction and chromatographic methods such as high performance liquid chromatography (HPLC).

A catalase suitable for use according to the invention may be a naturally-purified product, a product or a chemical synthesis, a product produced by a recombinant technique from a prokaryotic or eukaryotic host, including, for example. Bacterial, yeast, fungal, higher plant, insect and mammalian cells.

The catalase may be mixed with carriers or diluents which will not interfere with the intended purpose of the catalase. In one aspect, the catalase suitable for use according to the invention may be in a substantially purified form. In one aspect, the catalase may not be purified. As discussed further below, the invention advantageously allows for the presence of glucose oxidase side-activity in the catalase composition, i.e. there is increased tolerance for the presence of glucose oxidase. This is economically beneficial as it means that glucose oxidase does not need to be purified out of the catalase composition, which can save the cost of further purification.

Catalase activity may be measured in Baker Units/g, wherein 1 Baker Unit is defined as that amount of catalase which will decompose 264 mg hydrogen peroxide at a "double exhaustion" analysis based on the simultaneous inactivation of catalase by hydrogen peroxide and the breakdown of hydrogen peroxide by catalase after 60 minutes incubation at pH 7.0 and 25.0 °C.

In one aspect of the invention, catalase is added at a dose of at least about 7000 U/L wort. In one aspect, catalase is added at a dose of at least about 5000 U/L wort. In one aspect, catalase is added at a dose of at least about 2000 U/L wort. In one aspect, catalase is added at a dose of at least about 1000 U/L wort. In one aspect, catalase is added at a dose of at least about 500 U/L wort. Preferably, catalase is added at a dose of at least about 7000 U/L wort.

Catalase activity may alternatively be measured in CIU. The degradation of hydrogen peroxide may be monitored using spectrophotometry at 240 nm. The time taken for a specified decrease in absorbance at a specified H₂O₂ concentration is an expression of catalase activity. One CIU is defined as the enzyme activity that will degrade one µM H₂O₂ per minute at pH 7.0 and 25°C, reducing the H₂O₂ concentration from 10.3 to 9.2 mM.

Reaction conditions:
Enzyme concentration approx. 100 CIU/ml_
Substrate concentration 10.3 mM H₂O₂
Buffer 50 mM phosphate
Temperature 25°C
PH 7.0

Detection:
Wavelength 240 nm
Absorbance range 0.450 - 0.400
Time range 0.267-0.400 minutes (16-24 seconds)

In a preferred aspect the catalase comprises a sequence of SEQ ID NO:1 or SEQ ID NO:2, or a sequence having at least 70% identity thereto. In a preferred aspect the catalase comprises a variant, fragment, derivative or homologue of the sequence of SEQ ID NO:1 or SEQ ID NO:2 as defined herein below. The variant, fragment, derivative or homologue according to the invention has catalase activity. The catalase may be in isolated form.
SEQ ID NO: 1 sets forth the mature amino acid sequence of the catalase from *Aspergillus niger:*
SEQ ID NO: 2 sets forth the putative amino acid sequence of the catalase from *Aspergillus niger,* with the potential truncated N-terminal region cleaved off underlined and in bold:
SEQ ID NO: 3 sets forth the putative amino acid sequence of the catalase expressed from *Aspergillus niger*:
SEQ ID NO: 4 sets forth the putative amino acid sequence of the catalase expressed from *Trichoderma reesei:*

### Sequence identity

In addition to the specific amino acid sequences and polynucleotides mentioned herein, the present invention encompasses variants, homologues, derivatives and fragments thereof.

The term "variant" is used to mean a nucleotide sequence or amino acid sequence which differs from a wild-type sequence.

For example, a variant may include substitutions, insertions, deletions, truncations, transversions and/or inversions at one or more position(s) relative to a wild-type sequence. Variants can be made using methods known in the art for example site scanning mutagenesis, insertional mutagenesis, random mutagenesis, site-directed mutagenesis and directed-evolution as well as using recombinant methods well known in the art. Polynucleotide sequences encoding variant amino acid sequences may readily be synthesized using methods known in the art.

In some aspects, the variant is a naturally occurring nucleotide sequence or amino acid sequence which differs from a wild-type sequence. For example, the variant may be a natural genetic variant.

The term "isolated" means that the sequence is at least substantially free from at least one other component with which the sequence is naturally associated in nature and as found in nature.

In one aspect, "isolated variant" or isolated active fragment thereof as used herein refers to a polypeptide which is at least 30% pure, at least 40% pure, at least 60% pure, at least 80% pure, at least 90% pure, and at least 95% pure, as determined by SDS-PAGE.

In some aspects, the variant is an engineered variant. For example, the variant may be engineered by recombinant methods.

In one embodiment, a "wild-type sequence" is SEQ ID NO: 1.

The term "homologue" means an entity having a certain homology with the subject nucleotide sequences. Here, the term "homology" can be equated with "identity".

In the present context, a homologous sequence is taken to include an amino acid or a nucleotide sequence which may be at least 70, 75, 80, 85 or 90% identical, preferably at least 95%, 96%, 97%, 98 % or 99% identical to the subject sequence. Typically, the homologues will comprise the same active sites etc. as the subject amino acid sequence for instance. Although homology can also be considered in terms of similarity (i.e. amino acid residues having similar chemical properties/functions), in the context of the present invention it is preferred to express homology in terms of sequence identity.

Suitably, a homologue of a catalase according to the present invention is an active catalase. In other words, the homologue of a variant according to the present invention has catalase activity.

In one aspect, a homologous sequence is taken to include an amino acid sequence or nucleotide sequence which has one or several additions, deletions and/or substitutions compared with the subject sequence. Homology comparisons can be conducted by eye, or more usually, with the aid of readily available sequence comparison programs. These commercially available computer programs can calculate % homology between two or more sequences.

Percent homology may be calculated over contiguous sequences, i.e. one sequence is aligned with the other sequence and each amino acid in one sequence is directly compared with the corresponding amino acid in the other sequence, one residue at a time. This is called an "ungapped" alignment. Typically, such ungapped alignments are performed only over a relatively short number of residues.

Although this is a very simple and consistent method, it fails to take into consideration that, for example, in an otherwise identical pair of sequences, one insertion or deletion will cause the following amino acid residues to be put out of alignment, thus potentially resulting in a large reduction in % homology when a global alignment is performed. Consequently, most sequence comparison methods are designed to produce optimal alignments that take into consideration possible insertions and deletions without penalising unduly the overall homology score. This is achieved by inserting "gaps" in the sequence alignment to try to maximise local homology.

However, these more complex methods assign "gap penalties" to each gap that occurs in the alignment so that, for the same number of identical amino acids, a sequence alignment with as few gaps as possible - reflecting higher relatedness between the two compared sequences - will achieve a higher score than one with many gaps. "Affine gap costs" are typically used that charge a relatively high cost for the existence of a gap and a smaller penalty for each subsequent residue in the gap. This is the most commonly used gap scoring system. High gap penalties will of course produce optimised alignments with fewer gaps. Most alignment programs allow the gap penalties to be modified. However, it is preferred to use the default values when using such software for sequence comparisons.

Calculation of maximum % homology or % identity therefore firstly requires the production of an optimal alignment, taking into consideration gap penalties.

The relationships between protein sequences are usually discovered by aligning them together and assigning this alignment a score. There are two main types of sequence alignment. Pairwise sequence alignment only compares two sequences at a time and multiple sequence alignment compares many sequences. Two important algorithms for aligning pairs of sequences are the Needleman-Wunsch algorithm and the Smith-Waterman algorithm. Popular tools for sequence alignment include BLAST for pairwise alignment, and ClustalW, MUSCLE, or MAFFT for multiple alignment.

There are two types of pairwise alignments: local and global alignments. A local alignment is an alignment of two sub-regions of a pair of sequences. This type of alignment is appropriate when aligning two sequences that may have local regions of similarity embedded in a background of a non-homologous sequence. For local alignments, the Smith-Waterman algorithm is the most commonly used. Other pairwise alignment tools include BLAST. A global alignment is a sequence alignment over the entire length of two or more protein sequences. In a global alignment, the sequences are assumed to be homologous along their entire length. An efficient algorithm for global alignment was described by Needleman and Wunsch 1970. Multiple protein sequence alignment tools such as CLUSTALW, MAFFT and MUSCLE are applied to evaluate similarities across multiple protein sequences.

A suitable computer program for carrying out such an alignment is available in the Vector NTI (Invitrogen Corp.) software package, which uses an algorithm comparable to the CLUSTAL W iterative multiple sequence alignment algorithm (Higgins DG & Sharp PM (1988), Gene 73(1), 237-244). Examples of software that can perform sequence comparisons include, but are not limited to, the BLAST package (see Ausubel et al., 1999, Short Protocols in Molecular Biology, 4th Ed - Chapter 18*),* BLAST 2 (see FEMS Microbiol Lett, 1999, 174(2): 247-50; FEMS Microbiol Lett, 1999, 177(1): 187-8), FASTA (Altschul et al., 1990, J. Mol. Biol., 403-410) and AlignX for example. At least BLAST, BLAST 2 and FASTA are available for offline and online searching (see Ausubel *et al*., 1999, pages 7-58 to 7-60).

Although the % homology can be measured in terms of identity, the alignment process itself is typically not based on an all-or-nothing pair comparison. Instead, a scaled similarity score matrix is generally used that assigns scores to each pairwise comparison based on chemical similarity or evolutionary distance. An example of such a matrix commonly used is the BLOSUM62 matrix - the default matrix for the BLAST suite of programs. Vector NTI programs generally use either the public default values or a custom symbol comparison table if supplied (see user manual for further details). For some applications, it is preferred to use the default values for the Vector NTI package.

Once the software has produced an optimal alignment, it is possible to calculate % homology, preferably % sequence identity. The software typically does this as part of the sequence comparison and generates a numerical result.

Gap Penalties may be used when determining a sequence identity. Examples of parameters used for a pairwise alignment are as set forth in Tables 1 and 2 below.

**Table 1.**

| FOR BLAST | |
|---|---|
| GAP OPEN | 9 |
| GAP EXTENSION | 2 |

**Table 2.**

| FOR CLUSTAL | DNA | PROTEIN |
|---|---|---|
| Weight Matrix | IUB | Gonnet 250 |
| GAP OPENING | 15 | 10 |
| GAP EXTEND | 6.66 | 0.1 |

In one embodiment, CLUSTAL may be used with the gap penalty and gap extension set as defined above.

Suitably, the degree of identity with regard to a nucleotide sequence is determined over at least 20 contiguous nucleotides, preferably over at least 30 contiguous nucleotides, preferably over at least 40 contiguous nucleotides, preferably over at least 50 contiguous nucleotides, preferably over at least 60 contiguous nucleotides, preferably over at least 100 contiguous nucleotides.

Suitably, the degree of identity with regard to a nucleotide sequence is determined over at least 100 contiguous nucleotides, preferably over at least 200 contiguous nucleotides, preferably over at least 300 contiguous nucleotides, preferably over at least 400 contiguous nucleotides, preferably over at least 500 contiguous nucleotides, preferably over at least 600 contiguous nucleotides, preferably over at least 700 contiguous nucleotides, preferably over at least 800 contiguous nucleotides.

Suitably, the degree of identity with regard to a protein (amino acid) sequence is determined over at least 100 contiguous amino acids, preferably over at least 200 contiguous amino acids, preferably over at least 300 contiguous amino acids.

For example, the degree of identity with regard to the amino acid sequence of a fragment may be determined over the length of the fragment sequence. In other words, the degree of identity with regard to the amino acid sequence of a fragment may be determined over the length of the shorter sequence.

Preferably, the degree of identity with regard to an amino acid or protein sequence may be determined over the whole mature sequence taught herein, such as over SEQ ID NO: 1 disclosed herein.

In the present context, the term "query sequence" means a homologous sequence or a foreign sequence, which is aligned with a subject sequence in order to see if it falls within the scope of the present invention. Accordingly, such query sequence can for example be a prior art sequence or a third party sequence.

In one preferred embodiment, the sequences are aligned by a global alignment program and the sequence identity is calculated by identifying the number of exact matches identified by the program divided by the length of the subject sequence.

In one embodiment, the degree of sequence identity between a query sequence and a subject sequence is determined by 1) aligning the two sequences by any suitable alignment program using the default scoring matrix and default gap penalty, 2) identifying the number of exact matches, where an exact match is where the alignment program has identified an identical amino acid or nucleotide in the two aligned sequences on a given position in the alignment and 3) dividing the number of exact matches with the length of the subject sequence.

In yet a further preferred embodiment, the global alignment program is selected from the group consisting of CLUSTAL and BLAST (preferably BLAST) and the sequence identity is calculated by identifying the number of exact matches identified by the program divided by the length of the subject sequence.

The sequences, such as variant sequences or catalase active fragments thereof, may also have deletions, insertions or substitutions of amino acid residues which produce a silent change and result in a functionally equivalent substance. Deliberate amino acid substitutions may be made on the basis of similarity in polarity, charge, solubility, hydrophobicity, hydrophilicity, and/or the amphipathic nature of the residues as long as the secondary binding activity of the substance is retained. For example, negatively charged amino acids include aspartic acid and glutamic acid; positively charged amino acids include lysine and arginine; and amino acids with uncharged polar head groups having similar hydrophilicity values include leucine, isoleucine, valine, glycine, alanine, asparagine, glutamine, serine, threonine, phenylalanine, and tyrosine.

Conservative substitutions may be made, for example according to the Table below. Amino acids in the same block in the second column and preferably in the same line in the third column may be substituted for each other as set forth in Table 3.

**Table 3.**

| | | |
|---|---|---|
| ALIPHATIC | Non-polar | GAP |
| | | IL V |
| | Polar - uncharged | C S T M |
| | | NQ |
| | Polar - charged | D E |
| | | KR |
| AROMATIC | | H F W Y |

The present invention also encompasses homologous substitution (substitution and replacement are both used herein to mean the interchange of an existing amino acid residue, with an alternative residue) that may occur i.e. like-for-like substitution such as basic for basic, acidic for acidic, polar for polar etc. Non-homologous substitution may also occur i.e. from one class of residue to another or alternatively involving the inclusion of unnatural amino acids such as ornithine (hereinafter referred to as Z), diaminobutyric acid ornithine (hereinafter referred to as B), norleucine ornithine (hereinafter referred to as O), pyriylalanine, thienylalanine, naphthylalanine and phenylglycine.

Replacements may also be made by synthetic amino acids (e.g. unnatural amino acids) include; alpha^{∗} and alpha-disubstituted^{∗} amino acids, N-alkyl amino acids^{∗}, lactic acid^{∗}, halide derivatives of natural amino acids such as trifluorotyrosine^{∗}, p-Cl-phenylalanine^{∗}, p-Br-phenylalanine^{∗}, p-I-phenylalanine^{∗}, L-allyl-glycine^{∗}, β-alanine^{∗}, L-a-amino butyric acid^{∗}, L-g-amino butyric acid^{∗}, L-a-amino isobutyric acid^{∗}, L-e-amino caproic acid^{#}, 7-amino heptanoic acid^{∗}, L-methionine sulfone^{#∗}, L-norleucine^{∗}, L-norvaline^{∗}, p-nitro-L-phenylalanine^{∗}, L-hydroxyproline^{#}, L-thioproline^{∗}, methyl derivatives of phenylalanine (Phe) such as 4-methyl-Phe^{∗}, pentamethyl-Phe^{∗}, L-Phe (4-amino)^{#}, L-Tyr (methyl)^{∗}, L-Phe (4-isopropyl)^{∗}, L-Tic (1,2,3,4-tetrahydroisoquinoline-3-carboxyl acid)^{∗}, L-diaminopropionic acid ^{#} and L-Phe (4-benzyl)^{∗}.

The notation ^{∗} has been utilised for the purpose of the discussion above (relating to homologous or non-homologous substitution), to indicate the hydrophobic nature of the derivative whereas # has been utilised to indicate the hydrophilic nature of the derivative, #^{∗} indicates amphipathic characteristics.

Variant amino acid sequences may include suitable spacer groups that may be inserted between any two amino acid residues of the sequence including alkyl groups such as methyl, ethyl or propyl groups in addition to amino acid spacers such as glycine or b-alanine residues. A further form of variation, involves the presence of one or more amino acid residues in peptoid form, will be well understood by those skilled in the art. For the avoidance of doubt, "the peptoid form" is used to refer to variant amino acid residues wherein the a-carbon substituent group is on the residue's nitrogen atom rather than the a-carbon. Processes for preparing peptides in the peptoid form are known in the art, for example Simon RJ et al., PNAS (1992) 89(20), 9367-9371 and Horwell DC, Trends Biotechnol. (1995) 13(4), 132-134.

The nucleotide sequences for use in the present invention may include within them synthetic or modified nucleotides. A number of different types of modification to oligonucleotides are known in the art. These include methylphosphonate and phosphorothioate backbones and/or the addition of acridine or poly lysine chains at the 3' and/or 5' ends of the molecule. For the purposes of the present invention, it is to be understood that the nucleotide sequences described herein may be modified by any method available in the art. Such modifications may be carried out in order to enhance the *in vivo* activity or life span of nucleotide sequences of the present invention.

The present invention also encompasses the use of nucleotide sequences that are complementary to the sequences presented herein.

Other variants of the sequences described herein may be obtained for example by probing DNA libraries made from a range of individuals, for example individuals from different populations. In addition, other homologues may be obtained and such homologues and fragments thereof in general will be capable of selectively hybridising to the sequences shown in the sequence listing herein. Such sequences may be obtained by probing cDNA libraries made from or genomic DNA libraries from other animal species, and probing such libraries with probes comprising all or part of any one of the sequences in the attached sequence listings under conditions of medium to high stringency. Similar considerations apply to obtaining species homologues and allelic variants of the polypeptide or nucleotide sequences of the invention.

Variants and strain/species homologues may also be obtained using degenerate PCR which will use primers designed to target sequences within the variants and homologues encoding conserved amino acid sequences within the sequences of the present invention. Conserved sequences can be predicted, for example, by aligning the amino acid sequences from several variants/homologues. Sequence alignments can be performed using computer software known in the art. For example, the GCG Wisconsin PileUp program is widely used.

The primers used in degenerate PCR will contain one or more degenerate positions and will be used at stringency conditions lower than those used for cloning sequences with single sequence primers against known sequences.

Alternatively, such polynucleotides may be obtained by site directed mutagenesis of characterised sequences. This may be useful where for example silent codon sequence changes are required to optimise codon preferences for a particular host cell in which the polynucleotide sequences are being expressed. Other sequence changes may be desired in order to introduce restriction enzyme recognition sites, or to alter the property or function of the polypeptides encoded by the polynucleotides.

### Glucose-oxidase activity

In one aspect of the invention as described herein, the catalase composition may also comprise glucose oxidase (GOX) activity.

In one aspect the GOX represents a side-activity to the catalase, for example in the event that the catalase is expressed in a host cell such as *T. reesei,* wherein a GOX side-activity remains in the catalase composition.

In one aspect the ratio of glucose oxidase : catalase activity may be more than 0.001; more preferably more than 0.0001 and even more preferably more than 0.00001.

In one aspect, the GOX may have the sequence of SEQ ID NO:9 (*T. reesei* GOX) or a variant, derivative, homologue or active fragment thereof as described herein. SEQ ID NO:9 is as follows:

A glucose-oxidase Unit (GODU) is the amount of enzyme, which oxidizes 1 µmol of beta-D-Glucose per minute. Glucose-oxidase (beta -D-glucose: oxygen-1-oxido-reductase, EC 1.1.3.4.) oxidises beta -D-glucose in the presence of oxygen to delta-glucono-lactone and hydrogen-peroxide. The generated hydrogen-peroxide oxidises ABTS-R (2, 2-Azino-di-(3-ethylbenzthiazoline)-6-sulfonate) in the presence of peroxidase (POD). This generates a green-blue colour, which is measured photometrically at 405 nm.

Beta - D - glucose + O₂ GOD, 30 ⁰C, pH 5,6 -> Delta-glucono-lactone + H₂O₂

H₂O₂ + ABTS _{red} POD ->2 H₉O + ABTS ᵣ

Reaction conditions:
Substrate Glucose 90 mM (16.2 g/L)
ABTS 1.25 mM (688 mg/L)
Glucose-oxidase 0.0061-0.0336 GODU/mL
Peroxidase (POD) 2930 U/L
Buffer Acetate, 100 mM
PH 5.60 ± 0.05
Temperature 30 °C ± 1 Reaction time 36 sec. (8 x 4.5 sec.)
Wavelength 405 nm

### Additional enzymes

In one aspect of the invention as described herein, additional enzymes may be used during the brewing process.

For example, a proline-specific protease may be used, for example for reduction or elimination of beer haze. Suitable proline-specific proteases will be known to the those of skill in the art.

In one aspect, the proline-specific protease is an enzyme having at least 75, 80, 85, 90, 95, 98, 99 or 100% sequence identity to SEQ ID NO:5, SEQ ID NO:6, SEQ ID NO:7 or SEQ ID NO:8 or an active fragment thereof.
SEQ ID NO:5 (*Aspergillus bertholletius*):
SEQ ID NO:6 (*Aspergillus niger*):
SEQ ID NO:7 (*Aspergillus transmontanensis*):
SEQ ID NO:8 (*Aspergillus homomorphus*):

The method may also involve adding one or more of an ALDC (alpha acetolactate decarboxylase) enzyme, a glucoamylase, a maltogenic alpha-amylase, a pullulanase, or a transglucosidase. Optionally, the ALDC enzyme is an acetolactate decarboxylase as set forth in EC 4.1.1.5. Optionally, the glucoamylase is a 1,4-alpha-glucosidase as set forth in EC 3.2.1.3. Optionally, the maltogenic alpha amylase is a glucan 1,4-alpha-maltohydrolase as set forth in EC 3.3.1.133. Optionally, the pullulanase is an alpha-dextrin endo-1,6-alpha-glucosidase, limit dextrinase, amylopectin 6-glucanohydrolase, debranching enzyme as set forth in EC 3.2.1.41. Optionally, the transglucosidase is 1,4-alpha-glucan-branching enzyme, Oligoglucan-branching glucosyltransferse as set forth in EC 2.4.1.24.

The present invention employs, unless otherwise indicated, conventional techniques of biochemistry, molecular biology, microbiology and recombinant DNA, which are within the capabilities of a person of ordinary skill in the art. Such techniques are explained in the literature. See, for example, J. Sambrook, E. F. Fritsch, and T. Maniatis, 1989, Molecular Cloning: A Laboratory Manual, Second Edition, Books 1-3, Cold Spring Harbor Laboratory Press; Ausubel, F. M. et al. (1995 and periodic supplements; Current Protocols in Molecular Biology, ch. 9, 13, and 16, John Wiley & Sons, New York, N. Y.); B. Roe, J. Crabtree, and A. Kahn, 1996, DNA Isolation and Sequencing: Essential Techniques, John Wiley & Sons; M. J. Gait (Editor), 1984, Oligonucleotide Synthesis: A Practical Approach, IrI Press; and, D. M. J. Lilley and J. E. Dahlberg, 1992, Methods of Enzymology: DNA Structure Part A: Synthesis and Physical Analysis of DNA Methods in Enzymology, Academic Press. Each of these general texts is herein incorporated by reference.

The present disclosure is described in further detail in the following examples, which are not in any way intended to limit the scope of the disclosure as claimed. The attached figures are meant to be considered as integral parts of the specification and description of the disclosure. The following examples are offered to illustrate, but not to limit the claimed disclosure.

### Example 1 - Enzymes

A highly active catalase preparation from *Aspergillus niger* having the amino acid sequence shown in SEQ ID NO: 1 (available from IFF, Food Enzymes, Denmark). The catalase preparation holds 1000 (Baker) Units/g where 1 Baker Unit is defined as that amount of catalase which will decompose 264 mg hydrogen peroxide at a "double exhaustion" analysis based on the simultaneous inactivation of catalase by hydrogen peroxide and the breakdown of hydrogen peroxide by catalase after 60 minutes incubation at pH 7.0 and 25.0 °C (770 F).

### Example 2 - Electron Spin Resonans (ESR) Measurements: Endogenous Antioxidative Potential and T600 Determination

The functional principle of the EAP determination is based on the application of the specific spin trap reagent α(4-pyridyl-1-oxide)-N-tert-butylnitrone (POBN), which decreases the distortions of the so called lag-time values in beer caused by the former spin trap reagent α-pyridyl-N-tert-butylnitrone (PBN) through a pH effect on the radical generation (16,38).

The following ESR spectrometer was used for the lag time measurement by means of PBN and for the EAP determination by means of POBN: X-band spectrometer; Bruker (ESP-300); cavity type: Bruker 4108 TMH No.: 8603 and X-band spectrometer; Magnettech Miniscope MS 100.

The irradiation experiments concerning the artificial generation of radicals were carried out by means of X-ray irradiation (X-ray tube from Seifert Debyflex). The term "X-ray system" for the generation of radicals, as used here, describes the artificial generation of radicals via ionizing radiation (X-ray radiation), as known in the prior art.

### Reagents

N-tert-butyl-α-(4-pyridyl)nitrone N-oxide (POBN) 99%, C10H14N2O2, 194.23 g/mol (Sigma Aldrich,1 g, at least 99%, No. 215430, CAS No. 66893-81-0, EC No. 266-512-3.).

Ethanol pro analysis 99.8%, C2H5OH, 46.07 g/mol, density: 1 1=0.79 kg (Merck Darmstadt);
The determination of the endogenous antioxidative potential (EAP value) using ESR spectroscopy is based on the indirect detection of the radical generation during accelerated beer ageing (60°C). For a certain period of time, the radical generation can be delayed or prevented by the endogenous antioxidative activity of beer. After consumption of antioxidants, the ESR signal increases when spin-trap adducts are formed, mainly hydroxyethyl radicals. The intersection of the two linear slopes gives a relative measure of the stability and the time at the intersection is defined as the EAP value (Deutsches Patent- und Markenamt DE 10 2005 043 113 A1, 2005. Patent US 20080248580, Method for determining the Endogenous Antioxidative Potential of beverages by means of ESR spectroscopy, 2008.). The T600 value is defined as the ESR signal intensity after 600 min assay and indicates qualitatively the content of radicals that are generated under forced ageing conditions (60°C) (Deutsches Patent- und Markenamt DE 10 2005 043 113 A1, 2005. Patent US 20080248580, Method for determining the Endogenous Antioxidative Potential of beverages by means of ESR spectroscopy, 2008.).

Beer samples were degassed in an ultrasonic bath for 15 min (max. 20°C). For each sample, 8.4 mg of POBN was diluted in 50 µL of double distilled water (final 3.5-3.6 mM POBN). For the preparation of ESR beer samples, amber vials were used containing 156 µL of ethanol (99%) and 12 mL of beer sample. Directly at the start of the measurement, 52 µL of the POBN solution was added and the enzyme sample 0.5 mL was placed in the auto sampler, total volume 12.708 mL, at 60°C. For the preparation of ESR wort samples, amber vials were used containing 10 mL malt-based wort extract and 700 µl ethanol. Directly at the start of the measurement, 105 µl POBN solution was added and the enzyme sample 0.5 mL solution was placed in the auto sampler, total volume 11.305 mL, at 60°C.

### Example 3 - ESR analysis of catalase in malt extract

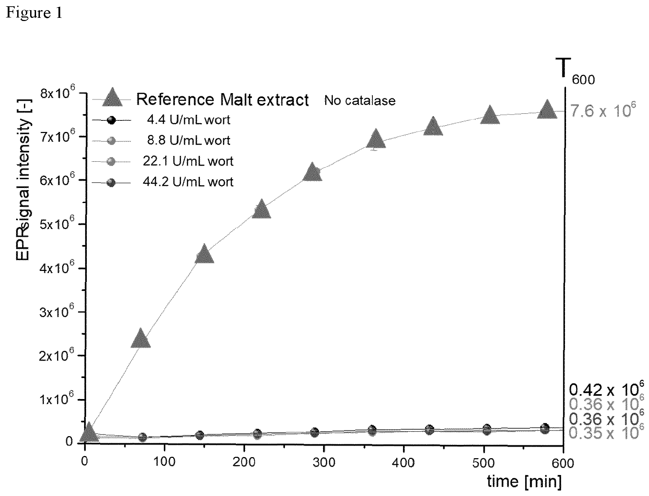

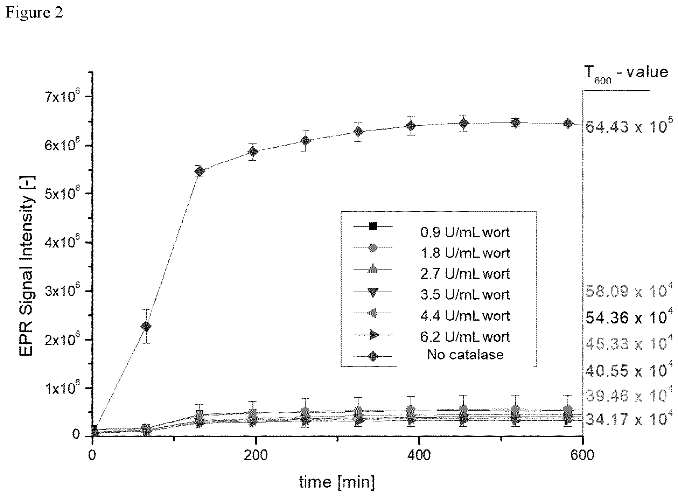

To assess the impact of the catalase during beer fermentation, various catalase as set forth in SEQ ID NO:1, were prepared in double distilled water in various dilutions and added to wort samples and analyzed by ESR. For the preparation of ESR wort samples, amber vials were used containing 10 mL malt-based wort extract,700 µl ethanol and before the start of the measurement, 105 µl POBN solution and 0.5 mL of the diluted enzyme sample was added and the solution was placed in the auto sampler, total volume 11.305 mL, at 60°C. The results of various catalase additions into wort in shown in both Figure 1 (0.0 - 44.2U/ml) and Figure 2 (0.0 - 6.2U/ml) in various dosages. Surprisingly, all dosages from even very low level of catalase (0.9 U/mL wort) showed a very good oxidative protection and complete lowering of the ESR signal. The T600 was lowered by catalase addition from 7.6 × 10⁶ to 0.35× 10⁶ (figure 1) and 64.43 x 10⁵ to 34.17× 10⁴ (Figure 2), without any assignable EAP, clearly suggesting the catalase can act on prooxidative radical generation by lowering hydrogen peroxide formed in wort however will not provide increased endogenous antioxidative potential (EAP). Thus, addition of catalase during beer fermentation in wort may significantly improve the oxidative stability of the wort and final beer.

### Example 4 - ESR analysis of catalase in dark colored pilsner with low EAP.

It is well known that the temperature during the withering and kilning steps in malt production increase generation of stable organic radicals in the finished malt consequently reducing the endogenous antioxidant potential value and sulfur dioxide content of the final beer. To assess the impact of the catalase to a beer with low endogenous antioxidant potential value, various catalase as set forth in SEQ ID NO:1, were prepared in double distilled water in various dilutions and added dark pilsner (Köstritzer pilsner, 4.6%(v/v) alc., Germany) samples and analyzed by ESR. For the preparation of ESR beer samples, amber vials were used containing 156 µL of ethanol (99%) and 12 mL of de-gassed beer sample.

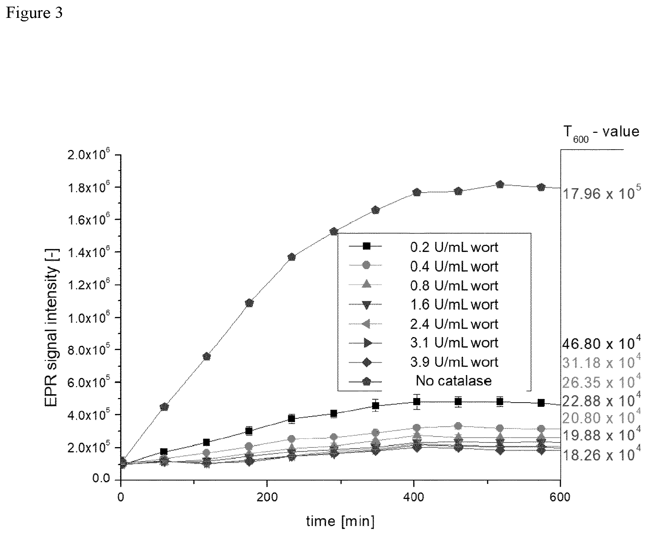

Directly at the start of the measurement, 52 µL of the POBN solution was added and the diluted enzyme sample 0.5 mL was placed in the auto sampler at 60°C, with a total volume of 12.708 mL. The results of various catalase additions into the dark pilsner with low EAP is shown in Figure 3 (0.0 - 3.9U/ml). A very clear effect of the catalase was observed showing a very good oxidative protection and lowering of the ESR signal. Beer sample without catalase showed increase of ESR signal over time with no assignable EAP. The addition of even 0.2 U/mL catalase showed very significant reduction of the ESR signal (lowering of T600 from 17.96 x 10⁵ to 46.80 × 10⁴) and addition of more than 0.8 U/mL catalase showed complete reduction of the ESR signal (lowering of T600 from 17.96 x 10⁵ to 26.35 × 10⁴). These results clearly indicate that addition of catalase to beer with low oxidative stability may greatly improve taste and shelf-life.

### Example 5 - ESR analysis of catalase in beer with EAP.

To assess the impact of the catalase to a beer with medium endogenous antioxidant potential, various catalase as set forth in SEQ ID NO:1, were prepared in double distilled water in various dilutions and added two pilsner beers (Heineken pilsner, 4.6%(v/v) alc., Germany and Becks, 4.6%(v/v) alc., Germany) samples and analyzed by ESR.

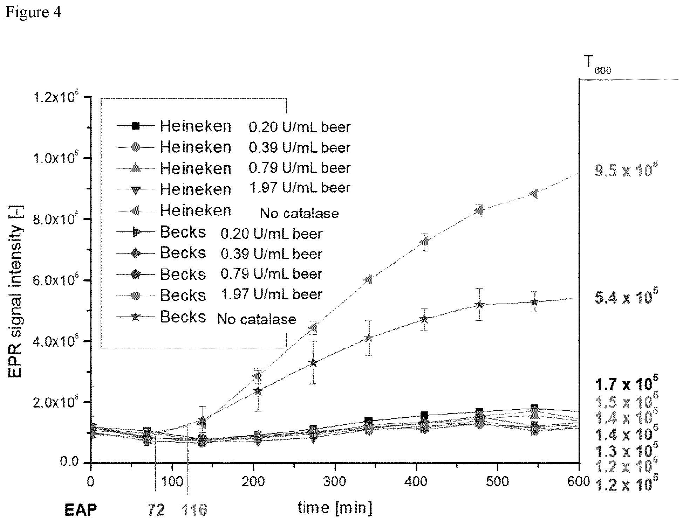

For the preparation of ESR beer samples, amber vials were used containing 182 µL of ethanol (99%) and 14 mL of de-gassed beer sample. Directly at the start of the measurement, 61 µL of the POBN solution was added and the diluted enzyme sample 0.5 mL was placed in the auto sampler at 60°C, with a total volume of 14.743 mL. The results of various catalase additions into the dark pilsner with low EAP is shown in Figure 4 (0.0 - 1.97U/ml). A clear effect of the catalase was observed showing a very good oxidative protection and lowering of the ESR signal. The addition of even 0.2 U/mL catalase showed complete reduction of the ESR signal (lowering of T600 from 9.5 x 10⁵ to 1.7 × 10⁵). These results clearly indicate that additional of catalase to beer with medium oxidantive stability (EAP of 72 and 116 min.) may greatly improve the stability and hereby taste and shelf-life of the beer.

## Claims

1. A method for producing a beer with improved flavor stability, wherein said method comprises adding a catalase composition during fermentation and/or maturation and/or stabilization of the beer, and/or comprises adding a catalase composition to the final beer.

2. The method according to claim 1, wherein the catalase is a microbial catalase.

3. The method according to claim 1 or claim 2 wherein said microbial catalase is derivable from a bacterium or a fungus.

4. The method according to any one of claims 1 to 3 wherein the microbial catalase is derivable from a fungus, preferably from an *Aspergillus sp.,* preferably *A. niger.*

5. The method according to any one of claims 1 to 4 wherein said catalase has the sequence of SEQ ID NO: 1, SEQ ID NO:2, SEQ ID NO:3, or SEQ ID NO:4, or a sequence with at least 70% identity thereto.

6. The method according to claim 5 wherein said catalase has a sequence with at least 75%, 80%, 85%, 90%. 95%, 96%, 97%, 98%, 99% or 100% identity to SEQ ID NO:1, SEQ ID NO:2, SEQ ID NO:3, or SEQ ID NO:4.

7. The method according to any one of claims 1 to 6 wherein said catalase is produced by recombinant techniques.

8. The method according to any one of claims 1 to 7, wherein the catalase composition further comprises glucose oxidase.

9. The method according to any one of claims 1 to 8, wherein said catalase is added during maturation and/or stabilization.

10. The method according to any one of claims 1 to 9, wherein a proline-specific protease is added during production of the beer.

11. The method according to any one of claims 1 to 10 wherein oxidative stability of the beer is improved.

12. Use of a catalase composition in the production of beer, wherein said catalase composition is adding during fermentation and/or maturation and/or stabilization, and/or is added to the final beer.

13. A beer obtained or obtainable by a method according to any one of claims 1 to 11.

14. The beer according to claim 13, wherein said beer comprises catalase.

15. The beer according to claim 13 or claim 14, wherein said beer comprises glucose oxidase.
